(19) Europäisches Patentamt
European Patent Office
Office européen des brevets

(11) **EP 3 608 657 A2**

(12) **EUROPEAN PATENT APPLICATION**

(43) Date of publication:
**12.02.2020 Bulletin 2020/07**

(51) Int Cl.:
***G01N 21/53*** *(2006.01)* ***G08B 17/10*** *(2006.01)*

(21) Application number: **19190485.3**

(22) Date of filing: **07.08.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.08.2018 IT 201800007931**
**07.08.2018 IT 201800007932**

(71) Applicant: **Inim Electronics S.r.l.**
**63076 Monteprandone (AP) (IT)**

(72) Inventors:
• **GALIFFA, Enea**
**63076 Monteprandone (AP) (IT)**
• **RUGGIERI, Baldovino**
**63076 Monteprandone (AP) (IT)**
• **LEONI, Leonello**
**63076 Monteprandone (AP) (IT)**

(74) Representative: **Hoffmann Eitle**
**Patent- und Rechtsanwälte PartmbB**
**Arabellastraße 30**
**81925 München (DE)**

(54) **METHOD AND SYSTEM FOR ENHANCING THE DETECTION DYNAMICS OF A PARTICULATE DETECTOR AND PARTICULATE DETECTOR**

(57)    A method, device and program for processing and a system for enhancing the detection dynamics of a particulate detector that can be operated on the basis of light diffusion measurements and/or for calibrating a detector are disclosed. The particulate detector comprising a first source of light radiation (LED1) and a second source of light radiation (LED2) configured respectively to emit light radiation of a first ($\lambda 1$) and second wavelength ($\lambda 2$) and of a second wavelength ($\lambda 2$), and a light radiation detector (11) configured to detect detection values corresponding to the emitted radiation. Moreover, information indicative of a first ($I_{SRC1LOW}$) and a second reduced switching-on value ($I_{SRC2LOW}$), and information indicative of a predetermined threshold value indicating whether to operate the detector of particulate on the basis of said first switching-on values or whether to operate the detector of particulate on the basis of said reduced switching-on values, are stored.

FIG. 2

EP 3 608 657 A2

## Description

### Field of the disclosure

This disclosure refers to a system, method and program for computer for the calibration of a particulate detector that is operable on the basis of light diffusion measurements. The disclosure also refers to a particulate detector. Further, the present disclosure refers to a system, a method and a program for computers for enhancing the detection dynamics of a particulate detector that is operable on the basis of light diffusion measurements.

According to one particular embodiment, this particulate detector can be used in the field of smoke detection and be used as an alarm system.

### The prior art

Known optical smoke detectors are based on the Tyndall effect, i.e. measuring, inside a sampling chamber into which light pulses are projected that typically come from a LED source or from an infrared light laser source, of the amount of diffused light because of the possible presence of smoke.

As is known, the Tyndall effect occurs when a particle is hit by photons having a wavelength that is comparable with the size thereof (for example a comparable wavelength and size that have the same order of magnitude). One of the main limits of optical detectors is the generation of false alarms in the presence of contaminating agents like steam, mist and dust.

It is known that the use of two light sources with different wavelengths (L1 and L2) enables the size of the particles inside the sampling chamber to be discriminated. This system is based on the alternating generation of light pulses having different wavelengths, so as to illuminate alternately the sampling chamber, and is based on the use of a wide-spectrum detector that is able to detect the light pulses on the two different wavelengths. In this context, a wide-spectrum detector indicates that the detector is able to detect at least photons having wavelengths centred respectively around the wavelengths emitted from the first (L1) and by the second (L2) light source.

The evaluation of the size of the particles present in the chamber is based on the principle according to which particles of different sizes deflect the light radiation at different angles in function of the wavelength of the radiation. In the specific case of blue radiation and infrared radiation, it is known that particles of small size diffuse blue light more than red light whereas, on the other hand, particles of large size diffuse infrared light more than blue light.

By detecting the two signals S1 and S2 generated at the radiation on the two different wavelengths that is deflected by the particles and by evaluating the ratio between the two signals S1 and S2, it is possible to extrapolate the size of the particles.

As is known, the estimated size of the particles can be used in a discriminating manner to ascertain whether the detector came into contact or not with the combustion fumes or with contaminating agents and influence the response of the detector to the control unit accordingly.

For the sake of completeness and by way of example, it is noted that the aerosols generated by real combustion are typically (but not necessarily) characterized by particles having a diameter comprised between 0.001 micrometres and 0.3 micrometres and are, principally, typically (but not necessarily) characterized by particles having a diameter comprised between 0.1 micrometres and 0.2 micrometres. Aerosols of different sizes have to be attributed to different agents. By way of further example, it is noted that the dust can be characterized by a diameter comprised between 0.4 micrometres and a hundred micrometres, whereas steams, mist and dew are characterized by a diameter comprised between a few micrometres up to 100 micrometres.

Measuring the two signals S1 and S2 detected at the two different wavelengths has a series of technical difficulties. The measurement uncertainties arising from these difficulties make the known technology hardly usable in serial production at reasonable prices.

Accordingly, the detectors known in the prior art are not sufficiently accurate.

### Summary of the invention

One objective of the present disclosure is to improve the prior art, for example overcome, or at least mitigate, at least one of the problems present in the prior art. This objective is reached in accordance with the teachings of the independent claims. The dependent claims also present other further advantageous embodiments.

In particular, the present disclosure proposes, using by way of example a standard two-coloured LED, solving the problem of response differences between the two signals S1 and S2 in different specimens of serial production by adopting technical solutions both in the design of the detector and through particular solutions during the manufacturing process.

Further, the present disclosure aims to make an optical smoke detector that, whilst maintaining great gain in signal reception status, is able to ensure appropriate response sensitivity, is able to overcome the limit due to the limited reading dynamics of light signals by extending the reading dynamics to values that are such as to make the ratio between the two signals always calculable.

In greater detail, in accordance with the present disclosure, a method is disclosed for enhancing the detection dynamics of a particulate detector that is operable on the basis of light diffusion measurements, the particulate detector comprising:

- a first source of light radiation LED1 and a second source of light radiation LED2 configured respectively to emit a time sequence of light radiation of a first wavelength $\lambda 1$ and of a second wavelength $\lambda 2$; and
- a light radiation detector 11 configured to detect detection values corresponding to the radiation emitted from the first source of light radiation LED1 and detection values corresponding to the radiation emitted from the second source of light radiation LED2;

the method for enhancing the detection dynamics comprising the steps of:

i) storing information indicative of a first switching-on value $I_{SRC1}$ relating to the first source of light radiation LED1, and a second switching-on value $I_{SRC2}$ relating to the second source of light radiation LED2;
ii) storing information indicative of a first reduced switching-on value $I_{SRC1LOW}$ relating to the first source of light radiation LED1 and a second reduced switching-on value $I_{SRC2LOW}$ relating to the second source of light radiation LED2;
(iii) storing information indicative of a predetermined threshold value indicating whether to operate the particulate detector on the basis of said first switching-on values or whether to operate the particulate detector on the basis of said reduced switching-on values.

Further, a particulate detector with enhanced reading dynamics, a system for enhancing the detection dynamics of a particulate detector and a computer program including instructions that, when executed by a computer, execute a method for enhancing the detection dynamics of a particulate detector.

In accordance with the present disclosure, a method is further disclosed for the calibration of a particulate detector operable on the basis of light diffusion measurements and able to detect particulate on the basis of a ratio R of a first detection value S1 to a second detection value S2, the particulate detector comprising:

- a first source of light radiation LED1 and a second source of light radiation LED2 configured respectively to emit, on the basis of respective switching-on values, a time sequence of light radiation of a first wavelength $\lambda 1$ and of a second wavelength $\lambda 2$; and
- a light radiation detector 11 configured to detect a detection value corresponding to the radiation emitted from the first source of light radiation LED1 and a detection value corresponding to the radiation emitted from the second source of light radiation LED2;

the calibrating method comprising the steps of:

A) setting at least one of a first switching-on value ($I_{SRC1}$) for the first source of light radiation (LED1) and a second switching-on value ($I_{SRC2}$) for the second source of light radiation (LED2) so that the ratio of the first detection value (S1) to a second detection value (S2) corresponds to a first predetermined ratio;
B) storing information indicative of at least one of a first switching-on value ($I_{SRC1}$) and a second switching-on value ($I_{SRC2}$) set in the step A) .

Lastly, there are disclosed a computer program including instructions that, when executed by a computer, execute the method for the calibration of a particulate detector, a system for calibrating particulate detectors and a calibrated particulate detector in accordance with the method disclosed above.

Similarly, there are also disclosed, a computer program including instructions that, when executed by a computer, execute the method for enhancing the detection dynamics of a particulate detector, a system for enhancing the detection dynamics of a particulate detector and a particulate detector the detection dynamics of which have been enhanced in accordance with the method disclosed above.

Further aspects of the present invention are moreover the following:

A1. Method for enhancing the detection dynamics of a particulate detector that is operable on the basis of light diffusion measurements,

the particulate detector comprising:

- a first source of light radiation (LED1) and a second source of light radiation (LED2) configured respectively to emit light radiation of a first wavelength ($\lambda 1$) and of a second wavelength ($\lambda 2$); and
- a light radiation detector (11) configured to detect detection values corresponding to (in the following, use will be made, in an interchangeable manner, of "related with") the radiation emitted from the first source of light radiation (LED1) and detection values corresponding to the radiation emitted from the second source of light radiation (LED2);

wherein the particulate detector is preferably able to detect particulate on the basis of a ratio (R) of a detection value (S1, $S1_{LOW}$) corresponding to the radiation emitted from the first source of light radiation (LED1) to another detection value (S2, $S2_{LOw}$) corresponding to the radiation emitted from the second source of light radiation (LED2);

the method for enhancing the detection dynamics comprising the steps of:

i) storing (V1), in storage means, information indicative of a first switching-on value ($I_{SRC1}$) relating to the first source of light radiation (LED1), and a second switching-on value ($I_{SRC2}$) relating to the second source of light radiation (LED2);

ii) storing (V2), in storage means, information indicative of a first reduced switching-on value ($I_{SRC1LOW}$) relating to the first source of light radiation (LED1) and a second reduced switching-on value ($I_{SRC2LOW}$) relating to the second source of light radiation (LED2);

(iii) storing (V3), in storage means, information indicative of a predetermined threshold value indicating whether to operate the particulate detector on the basis of said switching-on values or whether to operate the particulate detector on the basis of said reduced switching-on values.

A2. The method for enhancing the detection dynamics according to aspect A1 wherein the particulate detector is a smoke detector and the switching-on values are current values or voltage values, **preferably** the first wavelength ($\lambda 1$) and the second wavelength ($\lambda 2$) are comprised within the infrared electromagnetic spectrum region or within the blue electromagnetic spectrum region, and the first wavelength ($\lambda 1$) is comprised in a spectrum region different to the second wavelength ($\lambda 2$).

A3. Method according to one of aspects A1, A2, or A3, wherein:

the first switching-on value ($I_{SRC1}$) produces a first detection value (S1);
the second switching-on value ($I_{SRC2}$) produces a second detection value (S2);
the first reduced switching-on value ($I_{SRC1LOW}$) produces a first reduced detection value ($S1_{LOW}$);
the second reduced switching-on value ($I_{SRC2LOW}$) produces a second reduced detection value ($S2_{LOW}$);
wherein moreover the first reduced detection value ($S1_{LOW}$) is a fraction of the first detection value (S1) and wherein the second reduced detection value ($S2_{LOW}$) is a fraction of the second detection value (S2).

A4. The method for enhancing the detection dynamics according to aspect A3, wherein the ratio of the first detection value (S1) to the first reduced detection value ($S1_{LOW}$) is equal to the ratio of the second detection value (S2) to the second reduced detection value ($S2_{LOW}$), wherein **preferably** the ratio is five.

A5. The method for enhancing the detection dynamics according to one of the preceding aspects, wherein the first switching-on value ($I_{SRC1}$) and the second switching-on value ($I_{SRC2}$) are such that the second detection value (S2) corresponds to a multiple of the first detection value (S1), wherein the first switching-on value ($I_{SRC1}$) and the second switching-on value ($I_{SRC2}$) are determined in a calibration step of the particulate detector, **preferably** wherein the first detection value (S1) is substantially equal to the second detection value (S2).

A6. The method for enhancing the detection dynamics according to aspect A5, wherein the first detection value (S1) corresponds to a reference value ($S_{ref}$), wherein **preferably** the reference value ($S_{ref}$) corresponds to the reading value of a reference detector.

A7. Particulate detector that is operable on the basis of light diffusion measurements, and is able to detect particulate, wherein the particulate is preferably smoke, preferably on the basis of a ratio (R) of a detection value (S1, $S1_{LOW}$), corresponding to the radiation emitted from the first source of light radiation (LED1), to another detection value (S2, $S2_{LOW}$) corresponding to the radiation emitted from the second source of light radiation (LED2), comprising:

- a first source of light radiation (LED1) and a second source of light radiation (LED2) configured respectively to emit light radiation of a first wavelength ($\lambda 1$) and of a second wavelength ($\lambda 2$) when operated on the basis of switching-on values;

- a control device configured to operate the first source of light radiation (LED1) in accordance with a first switching-on value ($I_{SRC1}$) and with a first reduced switching-on value ($I_{SRC1LOW}$), and

configured to operate the second source of light radiation (LED2) in accordance with a second switching-on value ($I_{SRC2}$) and with a second reduced switching-on value ($I_{SRC2LOW}$), in which information indicative of the switching-on values is stored in a storage device; and

- a light radiation detector (11) configured to detect a first detection value corresponding to the radiation emitted from the first source of light radiation (LED1) and a second detection value corresponding to the radiation emitted from the second source of light radiation (LED2);

characterized in that:
the control device is configured to control the first source of light radiation (LED1) and the second source of light radiation (LED2)

in accordance respectively with the first switching-on value ($I_{SRC1}$) and the second switching-on value ($I_{SRC2}$), or
in accordance respectively with the first reduced switching-on value ($I_{SRC1LOW}$) and the second reduced switching-on value ($I_{SRC2LOW}$),
on the basis of a predetermined threshold value and preferably on the basis of at least one detection value detected by the light radiation detector (11), wherein information indicative of the predetermined threshold value is stored in a calibration step of the detector.

A8. Particulate detector according to aspect A7 wherein,

the control device is configured to control the first source of light radiation (LED1) and the second source of light radiation (LED2) respectively in accordance with the first switching-on value ($I_{SRC1}$) and the second switching-on value ($I_{SRC2}$) if both a first detection value (S1) and a second detection value (S2) are smaller than the predetermined threshold value, and
the control device is configured to control the first source of light radiation (LED1) and the second source of light radiation (LED2) respectively in accordance with the first reduced switching-on value ($I_{SRC1LOW}$) and the second reduced switching-on value ($I_{SRC2LOW}$) if at least one of the first detection value (S1) and the second detection value (S2) is greater than or equal to the predetermined threshold value.

A9. Particulate detector according to aspect A7 or A8, wherein
the particulate detector is a smoke detector and the switching-on values are current values or voltage values, the first wavelength ($\lambda1$) and the second wavelength ($\lambda2$) are respectively comprised within the infrared electromagnetic spectrum region and within the blue electromagnetic spectrum region.
A10. Particulate detector according to one of aspects A7 to A9, where
the first switching-on value ($I_{SRC1}$) and the second switching-on value ($I_{SRC2}$) are such as to produce a predetermined ratio of the first detection value to the second detection value, when the particulate detector is placed in an environment including a reference particulate having predetermined features, **preferably** wherein the predetermined ratio is substantially equal to 1.
A11. Particulate detector according to one of aspects A7 to A9, where

the first switching-on value ($I_{SRC1}$) produces the first detection value (S1), and the first reduced switching-on value ($I_{SRC1LOW}$) produces a first reduced detection value ($S1_{LOW}$);
the second switching-on value ($I_{SRC2}$) produces the second detection value (S2) and the second reduced switching-on value ($I_{SRC2LOW}$) produces a second reduced detection value ($S2_{LOW}$);
wherein the first reduced detection value ($S1_{LOW}$) is a fraction of the first detection value (S1) and wherein the second reduced detection value ($S2_{LOW}$) is a fraction of the second detection value (S2).

A12. Particulate detector according to aspect A10 or A11, wherein the ratio of the first detection value (S1) to the first reduced detection value ($S1_{LOW}$) is equal to the ratio of the second detection value (S2) to the second reduced detection value ($S2_{LOW}$), wherein the ratio is **preferably** five.
A13. Computer program including instructions that, when executed by a computer, execute a method for enhancing the detection dynamics of a particulate detector according to one of aspects A1 to A6.
A14. System for enhancing the detection dynamics of a particulate detector capable to increase the detection dynamics of a particulate detector configured to carry out the steps of one of the aspects A1 to A6.

A15. Particulate detector the reading dynamics of which has been enhanced in accordance with one of the reading dynamics enhancing methods of one of the aspects A1 to A6.

Still further aspects of the invention can be disclosed as below (the numbering starts from A1, but are further aspects compared with those disclosed above):
Aspects of the invention can also be described as follows:

A1. Method for the calibration of a particulate detector that is operable on the basis of light diffusion measurements and is able to detect particulate on the basis of a ratio (R) of a first detection value (S1) to a second detection value (S2), the particulate detector comprising:

- a first source of light radiation (LED1) and a second source of light radiation (LED2) configured respectively to emit, on the basis of respective switching-on values, a light radiation of a first wavelength ($\lambda 1$) and of a second wavelength ($\lambda 2$); and
- a light radiation detector (11) configured to detect a detection value corresponding to the radiation emitted from the first source of light radiation (LED1) and a detection value corresponding to the radiation emitted from the second source of light radiation (LED2);

the calibrating method comprising the steps of:

A) setting (U1) at least one of a first switching-on value ($I_{SRC1}$) for the first source of light radiation (LED1) and a second switching-on value ($I_{SRC2}$) for the second source of light radiation (LED2) so that the ratio (R) of a first detection value (S1) to a second detection value (S2) corresponds to a first predetermined ratio;
B) storing (U2) information indicative of the at least one of a first switching-on value ($I_{SRC1}$) and a second switching-on value ($I_{SRC2}$) set in the step A) .

A2. Method according to aspect A1, wherein the setting step A) comprises the steps of:

i) setting the first switching-on value ($I_{SRC1}$) so that the first detection value (S1) corresponds to a desired reference value ($S_{ref}$);
ii) setting the second switching-on value ($I_{SRC2}$) so that the ratio of the first detection value (S1) to a second detection value (S2) corresponds to the predetermined ratio;

wherein the storing step B) further comprises the steps of:

iii) storing information indicative of the first switching-on value ($I_{SRC1}$);
iv) storing information indicative of the second switching-on value ($I_{SRC2}$).

A3. The calibrating method according to one of aspects A1 or A2, wherein the particulate detector is a smoke detector and the first wavelength ($\lambda 1$) and the second wavelength ($\lambda 2$) are respectively comprised within the infrared electromagnetic spectrum region and within the blue electromagnetic spectrum region.
A4. The calibrating method according to one of aspects A1 to A3, wherein the predetermined ratio corresponds to a whole number, wherein **preferably** the predetermined ratio corresponds to a unit ratio.
A5. The calibrating method according to one of the preceding aspects, further comprising the following steps:

i bis) setting at least one of:

- a first reduced switching-on value ($I_{SRC1LOW}$) for the first source of light radiation (LED1) producing a first reduced detection value ($S1_{LOW}$) corresponding to a first fraction of the first detection value (S1); and

- a second reduced switching-on value ($I_{SRC2LOW}$) for the second source of light radiation (LED2) producing a second reduced detection value ($S2_{LOW}$) corresponding to a second fraction of the second detection value (S2),

so that the ratio of the first reduced detection value ($S1_{LOW}$) to the second reduced detection value ($S2_{LOW}$) corresponds to a second predetermined ratio;

ii bis) storing the thus set reduced switching-on value;

wherein the first predetermined ratio **preferably** corresponds to the second predetermined ratio.

A6. Method according to aspect A5, wherein the setting step comprises the step of:

> i tris) setting the first reduced switching-on value ($I_{SRC1LOW}$) and setting the second reduced switching-on value ($I_{SRC2LOW}$) so that the ratio of the first reduced detection value ($S1_{LOW}$) to the second reduced detection value ($S2_{LOW}$) corresponds to the second predetermined ratio;

wherein the storing step comprises the step of:

ii tris) storing the first reduced switching-on value and storing the second reduced switching-on value.

A7. The calibrating method according to aspect A6, comprising the step of

v) storing, during the calibration step, a threshold value of the light radiation detector (11), on the basis of which the first source of light radiation (LED1) and the second source of light radiation (LED2) are operated, during an operation step of the particulate detector, respectively

> on the basis of the first switching-on value and of the second switching-on value, or
> on the basis of the first reduced switching-on value and of the second reduced switching-on value,
> wherein **preferably** the threshold value corresponds substantially to a saturation threshold of the light radiation detector (11).

A8. The calibrating method according to one of the preceding aspects, wherein a reference detector is present in an environment comprising a reference particulate, and wherein the desired reference value ($S_{ref}$) corresponds to the reading value of the reference detector; **preferably** wherein the calibration of the reference detector is checked at regular intervals of time.

A9. The method according to one of the preceding aspects comprising the step of

vi) setting an enhanced sensitivity coefficient, indicating how reactive the detector has to be at values of the ratio (R) > 1.

A10. The method according to one of the preceding aspects comprising the step of

vii) setting a false alarms rejection coefficient, indicating how much the detector has to slow the response at values of the ratio (R) < 1.

A11. Particulate detector that is operable on the basis of light diffusion measurements and that is able to detect particulate on the basis of a ratio (R) of a first detection value to a second detection value, comprising:

> - a first source of light radiation (LED1) and a second source of light radiation (LED2) configured respectively to emit, on the basis of respective switching-on values, and light radiation of a first wavelength ($\lambda1$) and of a second wavelength ($\lambda2$);
> - a control device configured to operate the first source of light radiation (LED1) and the second source of light radiation (LED2) respectively in accordance with a first switching-on value ($I_{SRC1}$) and a second switching-on value ($I_{SRC2}$), wherein information indicative of the at least one switching-on value between the first switching-on value ($I_{SRC1}$) and the second switching-on value ($I_{SRC2}$) is stored in a calibration step of the particulate detector; and
> - a light radiation detector (11) configured to detect a first detection value corresponding to the radiation emitted from the first source of light radiation (LED1) and a second detection value corresponding to the radiation emitted from the second source of light radiation (LED2);

wherein the first switching-on value ($I_{SRC1}$) and the second switching-on value ($I_{SRC2}$) are such as to produce a predetermined ratio of the first detection value to the second detection value, the predetermined ratio being a value established prior to storage of the first switching-on value ($I_{SRC1}$) and of the second switching-on value ($I_{SRC2}$).

A12. Particulate detector according to aspect A11, where

the control device is further configured to control the first source of light radiation (LED1) and the second source of light radiation (LED2) respectively in accordance with a first reduced switching-on value ($I_{SRC1LOW}$) and a second reduced switching-on value ($I_{SRC2LOW}$), wherein

the control device is configured to control the first source of light radiation (LED1) and the second source of light radiation (LED2) respectively in accordance with the first switching-on value ($I_{SRC1}$) and the second switching-on value ($I_{SRC2}$) that are stored in a storage device, if both the first detection value and the second detection value are smaller than a determined predetermined threshold value, and

the control device is configured to control the first source of light radiation (LED1) and the second source of light radiation (LED2) respectively in accordance with the first reduced switching-on value ($I_{SRC1LOW}$) and the second reduced switching-on value ($I_{SRC2LOW}$) stored in the storage device, if at least one of the first detection value and the second detection value is greater than or equal to a determined predetermined threshold value.

A13. Computer program including instructions that, when executed by a computer, execute the method for the calibration of a particulate detector according to one of aspects A1 to A10.

A14. System for calibrating a particulate detector capable of calibrating a particulate detector by carrying out the steps of one of aspects A1 to A10.

A15. Particulate detector calibrated in accordance with one of the calibration methods of one of aspects A1 to A10.

A16. Particulate detector according to aspect A11 or A12, further comprising:

a temperature sensor configured to detect the temperature of the particulate detector;
wherein the particulate detector is configured to modify at least one switching-on value of the switching-on values on the basis of the temperature detected by the temperature sensor.

**Brief description of the drawings**

The present invention will be illustrated with reference to the attached drawings, wherein:

FIG. 1A illustrates schematically an exploded view of an example of a smoke detector.
FIG. 1B illustrates schematically a detail of the light source.
FIG. 2 shows a flow chart relating to a method for enhancing the detection dynamics of a particulate detector according to a first embodiment of the present invention.
FIG. 3 shows a flow chart relating to a method for enhancing the detection dynamics of a particulate detector according to one example of the first embodiment.
FIG. 4 shows a flow chart relating to a calibrating method of a particulate detector according to a second embodiment of the present invention.
FIG. 5 shows a flow chart relating to a particular example of the calibrating method of a particulate detector according to the second embodiment of the present invention.
FIG. 6 shows a block diagram relating to a particulate detector according to the first embodiment of the present invention.
FIG. 7 shows a block diagram illustrating a computer suitable for executing instructions to execute the calibrating method and/or to enhance the dynamics according to a further embodiment of the present invention.

**Detailed description**

As recognized by the inventors, on the basis of attentive and in-depth considerations, detectors known in the prior art are subject to technical difficulties that do not enable a ratio to be obtained between the two signals S1 and S2 (corresponding to the detection or measurement of the two wavelengths) that is repeatable and stable over time, which in turn hampers the reliability of the ability of the detector to discriminate between combustion fumes and contaminating agents. For example, there are the following drawbacks:

• Different output of the light source at different wavelengths: a light source consisting of a standard two-colour LED (for example, LED containing two chips of the same dimension) has different outputs at the two different wavelengths, which leads to two response signals S1 and S2 that are intrinsically and systemically different from one another and that are hardly comparable.
• Efficiency difference between different LED batches: this difference could lead to a different measurement of the two signals SL1 and SL2 between different specimens of the smoke detectors, making maintenance of the ratio, between the two in all the specimens of serial production, difficult.
• Different sensitivity at the different wavelengths: it is known that wide spectrum detectors have different sensitivity at the different wavelengths, these differences are further variable from one detector to another. It is thus difficult, even with the same size of particles, to maintain a constant and repeatable ratio between the two signals SL1 and SL2.

The detector basing its function of alarm generation on the ratio between the two signals, has to be able to rely on an accurate response in the presence of particles of a predetermined size.

One problem of known detectors thus lies, by virtue of the technical difficulties described above and considered by the inventors, in the limited reliability of the response due to the difficulty of discriminating the size of the detected particulate. Further, as observed by the inventors, known prior-art detectors can reach a saturation level that does not permit correct operation of the detector, at least in certain circumstances as in environments with particular features, wherein for example, puffs of steam or gusts of wind occur, or in the presence of dust and/or mist (such as for example in warehouses, workshops or kitchens). Embodiments and examples will also be disclosed wherein the detector, whilst maintaining very high sensitivity that enables a very low concentration of smoke to be detected, also has wide reading dynamics so as to be able to be capable of evaluating the ratio between the two signals even in the presence of high concentrations of smoke or contaminating agents. In this manner, the detector is prevented from reaching the reading saturation limit so that it is still possible to calculate the ratio between the two signals accurately.

Favourite embodiments will be disclosed below with reference to the appended drawings.

Although particular examples of embodiments are presented below, the present disclosure must not be interpreted as being limited by the examples provided but rather the particular embodiments disclosed must be interpreted as representing the concepts that are the basis of this disclosure. As it will be immediately apparent to the person skilled in the art, the aspects and the features disclosed in conjunction with an embodiment can be freely combined with other embodiments without thereby departing from the teachings of the present disclosure.

The set-up disclosed below and particularly the reference to the specific type of smoke detector, rather than other types of particulate detector, must be interpreted as exemplary and as a help in the comprehension of this disclosure in the context in which it was originally conceived and developed and must not be interpreted as limiting the claimed invention, which on the other hand relates to a generic particulate detector and is defined solely by the appended claims. For example, according to some embodiments of the present invention, the particulate detector can be used to detect dust or steam rather than detect smoke. In these cases, it could be advantageous to use light sources emitting radiation of a different wavelength compared with the wavelength disclosed below.

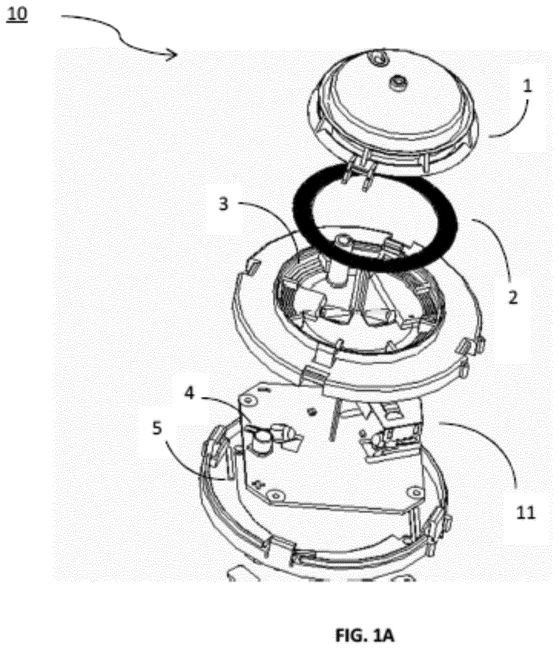

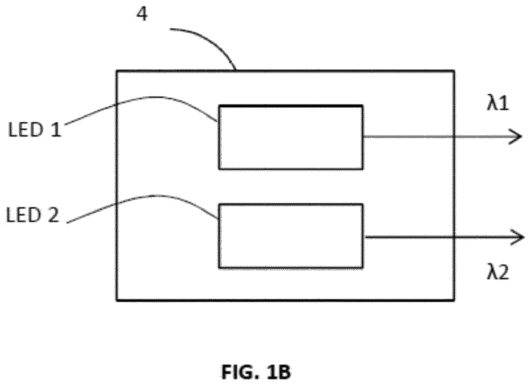

FIG. 1 illustrates schematically an example of an optical smoke detector that is useful for comprising the context in which the present disclosure was developed.

This detector has an air inlet area 1 to the sampling chamber that enables the air and possible particulate present therein to flow to a sampling chamber 3, and a light source 4 that is able to emit radiation at different wavelengths. This light source 4 can be located on a substrate 5 and can include two diverse light sources LSRC1 and LSRC2 (not illustrated in detail in the figure) that are able to emit photons having respectively a first wavelength $\lambda 1$ and a second wavelength $\lambda 2$, wherein the first wavelength $\lambda 1$ and the second wavelength $\lambda 2$ are different from one another. The substrate 5 can also be able to house a light radiation detector 11. Optionally, the particulate detector can also comprise a filter for insects 2, for example a filter net that prevents the insects from entering the sampling chamber.

The light source 4 can, for example, be a light-emitting diode (LED) containing two chips and being able to emit radiation centred in the infrared $\lambda_{SRC2}$ and in the blue $\lambda_{SRC1}$. The two chips can have the same dimension or two different dimensions. Reference will be made below also to a first source of light pulses LED1 and to a second source of light pulses LED2. In accordance with the present disclosure, the first source of light pulses LED1 and the second source of light pulses LED2 can be made separately or be made together and be part of the same diode 4 having two chips as illustrated in FIG. 1B. It is pointed out that what is disclosed also applies to non-pulsed light sources; and that many references are made to pulsed light sources only for reasons of clarity of disclosure. In fact, for the operation of what it is disclosed here, it is sufficient that there are sources of light radiation (electromagnetic radiation).

The light radiation detector can be for example a photodiode that is able to detect photons emitted from the light source 4 at the various wavelengths.

The light radiation detector 11 can be able to detect photons emitted from each of the light sources; in general, the value detected by the light radiation detector 11 may depend on the wavelength of the incident photons, i.e. the light radiation detector 11 can have different sensitivity at the different wavelengths.

The optical elements can be so arranged that the detector is not hit by the direct light transmitted by the light source 4 but is hit only by possible light diffused by possible aerosols present in the sampling chamber 3. For example, the use is known of opaque labyrinths or obstacles to prevent direct radiation being detected but at the same time enable diffused light to be detected (by for example light scattering and/or diffusion phenomena).

The two sources of light pulses LED1 and LED2 can be operated by a microcontroller (also control device) contained in the detector via a DAC converter, i.e. Digital to Analog Converter, on the basis of an algorithm. In this manner the microcontroller will be able to modulate respectively a first switching-on value $I_{SRC1}$ and a second switching-on value $I_{SRC2}$ relating respectively to the first source of light pulses LED1 and to the second source of light pulses LED2.

These switching-on values $I_{SRC1}$ and $I_{SRC2}$ can for example correspond to, or be indicative of, respectively, two current values that flow respectively inside the first source of light pulses LED1 and the second source of light pulses LED2.

Similarly, the first switching-on value $I_{SRC1}$ and the second switching-on value $I_{SRC2}$ can also correspond to or be indicative of, respectively, two voltage values. According to some embodiments of the invention, other physical parameters can also be usable.

On the basis of the two switching-on values $I_{SRC1}$ and $I_{SRC2}$, and on the basis of the algorithm, the microcontroller is able to control the intensity LSRC1 and LSRC2 of the light emitted from the first source of light pulses LED1 and by the second source of light pulses LED2.

The two switching-on values, respectively the first switching-on value $I_{SRC1}$ and the second switching-on value

$I_{SRC2}$, used by the microcontroller to activate and control each of the two sources of light pulses LED1 and LED2 can be values set during a calibration step of the particulate detector.

Information (or values) indicative of the first switching-on value $I_{SRC1}$ and/or the second switching-on value $I_{SRC2}$ can be stored in a storage device, can be saved, for example, in one or more non-volatile memories contained, for example, inside the microcontroller itself or the particulate detector in general, or which is accessible from the microcontroller or the detector (or in different memories). For example, digital memories can be used. This indicative information can be, for example, information obtained empirically and determined on the basis of the features of the particulate detector (such as for example, mechanical construction, geometry of the chamber, reflectance of the materials used, section and geometry of the inlet in the sampling chamber) and of the features of the light source 4 and of the light radiation detector 11 (efficiency, radiation diagram in function of the location thereof in the sampling chamber).

A value that is, for example, indicative of the first switching-on value means a value that enables the first switching-on value to be extrapolated. The operation of extrapolating the first switching-on value can be performed through a functional relation (i.e. expressed by a mathematical function), that enables a match to be established, for example a biunique match, between a start value (value indicative of the first switching-on value) and a final value (first switching-on value). The functional relation could for example consist of multiplying or dividing the start value by a scale value. The scale value could also be the unit value, in this case the indicative value corresponds exactly to the first switching-on value. Similar considerations apply similarly to the other values disclosed below, for example apply to the second switching-on value or to the threshold value.

The two switching-on values $I_{SRC1}$ and $I_{SRC2}$, can enable the two light sources to be modulated independently.

In particular, as will be disclosed in greater detail below, at least one switching-on value of the two switching-on values can be set so as to obtain a suitable ratio R value of a first detection value S1 to a second detection value S2 in the presence of particles having predetermined sizes. The first detection value S1 corresponds to the value detected by the light radiation detector 11 at the radiation emitted from the first source of light pulses LED1 and the second detection value S2 corresponds to the value detected by the light radiation detector 11 at the radiation emitted from the second source of light pulses LED2.

An appropriate value means in this context any predetermined value of the ratio R, i.e. a value determined before or during the calibration or manufacturing step of the particulate detector.

Optionally or additionally, during the calibration or manufacturing process of the particulate detector, it could be possible to determine for the first source of light pulses LED1 a first reduced switching-on value $I_{SRC1LOW}$. The first reduced switching-on value $I_{SRC1LOW}$ can be defined on the basis of a first reference switching-on value.

The first reduced switching-on value $I_{SRC1LOW}$ can be such that a first reduced detection value $S1_{LOW}$, produced at this first reduced switching-on value $I_{SRC1LOW}$ is attenuated, i.e. it is smaller than the detection value detected in the presence of the first reference switching-on value.

Further, it is possible to determine for the second source of light pulses LED2 a second reduced switching-on value $I_{SRC2LOW}$. The second reduced switching-on value $I_{SRC2LOW}$ can be such that a second reduced detection value $S_{2LOW}$ produced at this second reduced switching-on value $I_{SRC2LOW}$ is attenuated, i.e. it is smaller than the detection value detected in the presence of the second reference switching-on value.

According to one particular embodiment, the first reference switching-on value and the second reference switching-on value could be respectively the first switching-on value $I_{SRC1}$ and the second switching-on value $I_{SRC2}$ determined, for example, in accordance with the calibrating method, nevertheless, the present disclosure is not limited to this specific example, and both the first reduced switching-on value $I_{SRC1LOW}$ and the second reduced switching-on value $I_{SRC2LOW}$ can be defined on the basis of other reference switching-on values.

For example, the first reduced switching-on value $I_{SRC1LOW}$ could be defined on the basis of a reference value determined on the basis of other types of calibration, or could be defined starting from the switching-on value with respect to which the light radiation detector 11 reaches saturation. More in general, the reference switching-on value can be selected arbitrarily.

Similarly, it is also possible to define a second reduced switching-on value $I_{SRC2LOW}$ on the basis of a second arbitrary reference switching-on value.

The first reduced switching-on value $I_{SRC1LOW}$ and the second reduced switching-on value $I_{SRC2LOW}$ can be defined independently of one another by a first reference switching-on value that is different from the second reference switching-on value and/or by different functional relations with respect to the respective reference switching-on values. Alternatively, the first reduced switching-on value $I_{SRC1LOW}$ and the second reduced switching-on value $I_{SRC2LOW}$ can be defined so as to depend on one another, for example can be defined on the basis of the same reference switching-on value or can be defined by the same functional relation with respect to different reference switching-on values.

It should be noted that, a functional relation, for example, first functional relation and/or second functional relation, as used below, means a functional dependence, i.e. a constraint linking two sets of elements. Each of the sets of elements can consist of one or more elements. In other words, the functional relation is a mathematical relation matching at least two elements.

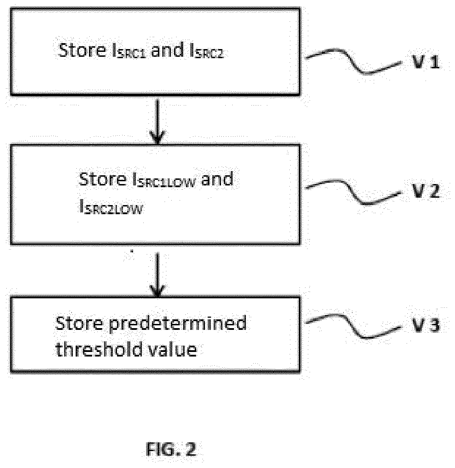

With reference to FIG 2, an embodiment will now be disclosed that relates to a method for enhancing the detection dynamics of a particulate detector. It should be noted that whenever reference is made to the storage of a value in the memory, it is to be understood that the value as such is stored or that a value indicative of this value is stored.

In a first step V1, the first switching-on value $I_{SRC1}$ relating to the first source of light pulses LED1 can be stored in a storage device (or storage means), for example the memory of the microcontroller. Similarly, also the second switching-on value $I_{SRC2}$ relating to the second source of light pulses LED2 can be stored in the storage device.

During a second step V2, the first reduced switching-on value $I_{SRC1LOW}$ relating to the first source of light pulses LED1 and the second reduced switching-on value $I_{SRC2LOW}$ relating to the second source of light pulses LED2 can be further stored in a storage device.

Lastly, in a third step V3 a predetermined threshold value indicating whether to operate the particulate detector on the basis of the switching-on values $I_{SRC1}$ and $I_{SRC2}$ or whether to operate the particulate detector on the basis of the reduced switching-on values $I_{SRC1LOW}$ and $I_{SRC2LOW}$ will also be stored in the storage device. This threshold value could indicate, or correspond to a saturation value (or to a threshold value) of the light radiation detector 11.

According to one illustrative embodiment, the particulate detector can be operated on the basis of the reduced switching-on values $I_{SRC1LOW}$ and $I_{SRC2LOW}$ when the value detected using the switching-on values $I_{SRC1}$ and $I_{SRC2}$ is greater than or equal to the predetermined threshold value. Further, the particulate detector can be operated on the basis of the switching-on values $I_{SRC1}$ and $I_{SRC2}$ when the value detected using the reduced switching-on values $I_{SRC1LOW}$ and $I_{SRC2LOW}$ is less or than or equal to a fraction of the predetermined threshold value (for example is less than 10% of the saturation value of the detector). In other words, the particulate detector is operated on the basis of the switching-on values $I_{SRC1}$ and $I_{SRC2}$ or on the basis of the reduced switching-on values $I_{SRC1LOW}$ and $I_{SRC2LOW}$ on the basis of the detected values and on the basis of the predetermined threshold value. Also in other words, the particulate detector is operated on the basis of the switching-on values $I_{SRC1}$ and $I_{SRC2}$ or on the basis of the reduced switching-on values $I_{SRC1LOW}$ and $I_{SRC2LOW}$ in function of the threshold value and of the detection values corresponding to the radiation emitted from the first source of light radiation (LED1) and detection values corresponding to the radiation emitted from the second source of light radiation (LED2). As a consequence of the use of the ("normal") switching-on values or of the reduced switching-on values and other parameters being equal (for example the concentration and type of particles in the sampling chamber 3), different values will be detected on the detector. Moreover, through the control of the switching-on values (i.e. using "normal" values or reduced values), it is possible to control the values that will be detected by the detector.

In one preferred embodiment, the threshold value is the same for both the first wavelength $\lambda1$ and for the second wavelength $\lambda2$.

If the light radiation detector 11 has different saturation values at different wavelengths, the threshold value could be selected, for example, so as to indicate, or correspond to the lowest or highest of all possible saturation values.

The switching-on values $I_{SRC1}$ and $I_{SRC2}$ can be used to operate the particulate detector on the basis of the detection value detected by the light radiation detector and of the threshold value. Similarly, the reduced switching-on values $I_{SRC1LOW}$ and $I_{SRC2LOW}$ can be used to operate the particulate detector on the basis of the detection value detected by the light radiation detector 11 and of the threshold value.

For example, the switching-on values $I_{SRC1}$ and $I_{SRC2}$ can be used to operate the particulate detector if the detection value detected by the light radiation detector 11 is smaller than (or smaller than or equal to) the predetermined threshold value, whereas the reduced switching-on values $I_{SRC1LOW}$ and $I_{SRC2LOW}$ can be used to operate the particulate detector if the detection value detected by the light radiation detector 11 is greater than (or greater than or equal to) the predetermined threshold value. The microcontroller can compare the predetermined threshold value with the detection value detected by the light radiation detector 11 and determine each time whether to use the switching-on values $I_{SRC1}$ and $I_{SRC2}$ or the reduced switching-on values $I_{SRC1LOW}$ and $I_{SRC2LOW}$. According to some embodiments, the reduced switching-on values $I_{SRC1LOW}$ and $I_{SRC2LOW}$ can be used if the detection value detected by the light radiation detector 11 is greater than or equal to the predetermined threshold value.

For example, it will be possible, if at least one of the first detection signal S1 and the second detection signal S2 detected by the photodiode reaches a value that is such as to saturate a receiving circuit SFS (not shown in the figure), to use the reduced switching-on values $I_{SRC1LOW}$ and $I_{SRC2LOW}$ that will give rise to a low reading.

According to this embodiment, no particular relation between the switching-on values $I_{SRC1}$ and $I_{SRC2}$ and the respective reduced switching-on values $I_{SRC1LOW}$ and $I_{SRC2LOW}$ needs to exist. The first reduced switching-on value $I_{SRC1LOW}$ and the second reduced switching-on value $I_{SRC2LOW}$ constitute a set of values that are independent of the set of switching-on values $I_{SRC1}$ and $I_{SRC2}$.

The method for enhancing the detection dynamics will enable the particulate detector, the dynamics of which has been enhanced by the use of two sets of switching-on values, to have extended reading dynamics relating to the first wavelength $\lambda1$ and relating to the second wavelength $\lambda2$ enabling it to evaluate the ratio R between the two signals also in conditions of high concentrations of particulate (e.g. puff of steam, gust of wind, drifting dust or mist) in the presence of which, according to the prior art, it would not have been possible to detect values reliably because of the saturation of the photodiode.

High concentrations of particulate can be defined as concentrations of particulate that could lead the light radiation detector 11 to produce an unreliable response (for example by saturation) if the first source of light pulses LED1 and/or the second source of light pulses were operated on the basis of non-reduced switching-on values. The unreliable response can for example occur if the light radiation detector 11 reaches saturation.

As will be known to the person skilled in the art, during a validation and/or certification process of the particulate detector, reference is made to typical fire outbreak that are produced in predetermined environments, including environments having high concentrations of particulate and which stress the detector. Reference is then further made to the response time of the detector to such stress in the different environments. The reference to typical fire outbreak in predefined environments enables "high" concentrations of particulate to be defined.

Optionally, and by way of example, in the present embodiment (the above considerations apply equally, unless specifically indicated otherwise) relations may exist between the switching-on values and the respective reduced switching-on values (example of a general functional relation).

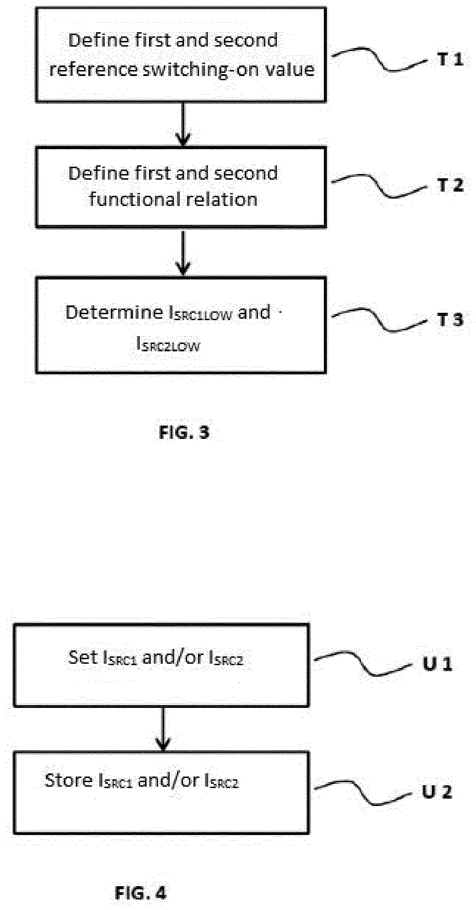

In particular, as shown by FIG. 3, which shows a specific example of the first embodiment, it is possible, in a first step T1, to define the first reference switching-on value. As already disclosed, different switching-on values can be selected and act as a reference switching-on value (i.e. value used to define the corresponding reduced switching-on value). Hereinafter, merely for the sake of simplicity of disclosure, the case is considered in which the first reference switching-on value coincides with the first switching-on value $I_{SRC1}$ and the second reference switching-on value coincides with the second switching-on value $I_{SRC2}$.

In a second step T2, a first functional relation can be defined between the first switching-on value $I_{SRC1}$ producing the first detection value $S_1$ and the first reduced switching-on value $I_{SRC1LOW}$ producing the first reduced detection value $S_{1LOW}$. In addition, a second functional relation can be defined between the second switching-on value $I_{SRC2}$ producing the second detection value $S_2$ and the second reduced switching-on value $I_{SRC2LOW}$ producing the second reduced detection value $S_{2LOW}$.

Accordingly, in step T3, the first reduced switching-on value $I_{SRC1LOW}$ and the second reduced switching-on value $I_{SRC2LOW}$ are determinable directly from the functional relation and from the respective switching-on values.

The first functional relation and the second functional relation can take on various shapes until the first reduced detection value $S1_{LOW}$ constitutes a fraction of the first detection value S1 and the second reduced detection value $S2_{LOW}$ constitutes a fraction of the second detection value S2.

The first switching-on value $I_{SRC1}$ and the second switching-on value $I_{SRC2}$, the first reduced switching-on value $I_{SRC1LOW}$ and the second reduced switching-on value $I_{SRC2LOW}$ and the first and the second functional relation can be saved in the memory of the microcontroller.

For each first reduced switching-on value $I_{SRC1LOW}$ and second reduced switching-on value $I_{SRC2LOW}$ it will always be possible to determine a respective actual detection value from the reduced detection value, in particular:

assuming that

$$I_{SRCiLOW} = f_i(I_{SRCi}) \quad [1]$$

it will be possible to determine the actual detection value as

$$Si = f_i^{-1}(S_{iLOW}) \quad [2]$$

The actual detection value can be defined as the detection value that, assuming linear behaviour of the light radiation detector 11, would have been measured by the light radiation detector 11 if a non-reduced switching-on value had been used. This actual detection value can also be defined as a known behaviour or an ideal behaviour. The reduced detection value is on the other hand the signal that is actually measured by the light radiation detector 11 and is due to the use of the reduced switching-on values.

Using the actual detection value is useful for being able to judge the two actually measured low signals.

In the above formulas, the index can be equal to 1 or 2 and indicate respectively the relations between the first switching-on values and the corresponding reduced switching-on values for the first and the second light source and the detection values and reduced detection values for the first and for the second light source. Similarly, $f_i$ and $f_i^{-1}$ can indicate the first functional relation or the second functional relation and the respective reverse functions. $f_i$ can be a generic mathematical function, for example a scale coefficient, or generic polynomial relation.

One still more specific example relating to the first embodiment will now be presented. According to this still more specific example of a linear functional relation, both the first reduced switching-on value $I_{SRC1LOW}$ and the second reduced switching-on value $I_{SRC2LOW}$ can be defined in such a manner as to obtain a first reduced detection value $S1_{LOW}$ and a second reduced detection value $S2_{LOW}$ attenuated respectively n times with respect to the first detection value S1 and to the second detection value S2, respectively. This value n can be saved in the memory of the microcontroller. According to one even more detailed embodiment, n can be equal to five, but in the general case n can be any rational number, preferably a whole number, greater than 1.

In particular, in the specific case of a reduced detection value $S_{LOW}$ attenuated n times, it will be possible to calculate the actual detection value Si, both for the first source of light pulses LED1 and for the second source of light pulses LED2, according to the relation:

$$S_i = S_{iLOW} \times n \quad [3]$$

i.e. a linear relation exists between reduced detection value $S_{LOW}$ and actual detection value $S_i$.

The index i can be equal to 1 or 2 and accordingly refer to the first source of light pulses LED1 and to the second source of light pulses LED2.

According to this particular embodiment, the detection dynamics is extended n times.

According to still another embodiment particular, the reverse function $f_{i-1}$ can be a predetermined value, defined during the design stage, so as to define a predetermined ratio of $S_i$ to $S_{iLOW}$ and the function fi can be a coefficient determined during the calibration stage. The determination during the calibration step can be achieved for example by varying progressively the reduced switching-on value, so that the equation [2] is satisfied.

Reference will now be made to a manufacturing and/or calibration process, observing that the calibration can be made inside or at the end of the manufacturing process or separately (also by another entity, in another place and/or at a later date) from the manufacturing itself.

According to a second embodiment, it is possible to calibrate the particulate detector.

In particular, it is possible, during a first step U1 to set at least one of the first switching-on value $I_{SRC1}$ for the first source of light radiation LED1 and the second switching-on value $I_{SRC2}$ for the second source of light radiation LED2 so that the ratio of the first detection value S1 to the second detection value S2 corresponds to a first predetermined ratio $R_s$. In other words, the switching-on values are so set that the detector detects the switching-on values according to a predetermined ratio $R_s$. In further other words, the part emitting light (one or both the sources) is set to emit the light at an intensity that is such that the part receiving/revealing the light detects the light according to the desired ratio $R_s$. For example, the setting can be achieved by attempts starting from a predetermined value for each of the two switching-on values and thus by varying both or just one thereof until the value $R_s$ is detected in a detector; or by selecting the values predetermined for each of the sources and by checking which combination of values reaches the ratio $R_s$, etc. Ratio $R_s$ means the exact value of the desired ratio $R_s$, or the value $R_s$ taking account of the tolerances as is apparent to the person skilled in the art.

In addition, it is possible to store, during a second step U2, at least one of the first switching-on value $I_{SRC1}$ and the second switching-on value $I_{SRC2}$ set in the preceding step.

According to a particular example of calibration, during the manufacturing process, each particulate detector can be subjected to different automated calibration steps and in particular can be subjected to a clean air step, to a smoke tunnel step and to a last clean air step.

The nomenclature of the various steps is provided merely to facilitate the reference, and other names for these steps will be immediately apparent to the person skilled in the art.

Moreover, further steps, like intermediate steps, finishing steps and pre-treatment steps that may occur before, during or after the three indicated steps will also be immediately apparent to the person skilled in the art.

One technical effect of the disclosed calibration process consists of the fact that the smoke detector that is thus constructed will be able to measure the BIR - Blue on Infrared Ratio - of the first detection value S1 detected at photons characterized by the first wavelength $\lambda1$ (for example radiation in a neighbourhood of the blue) to the second detection value S2 detected at photons characterized by the second wavelength $\lambda2$ (for example radiation in a neighbourhood of the infrared) in any operating condition, from very low aerosol concentration to limit conditions (puffs of steam, mists, gusts of air and dust).

For the sake of completeness, it is noted that alternatively the first wavelength $\lambda1$ could be radiation in a neighbourhood of the infrared whereas the second wavelength $\lambda2$ could be radiation in a neighbourhood of the blue.

By following the disclosed method, a known response of the particulate detector can be obtained in the presence of known conditions.

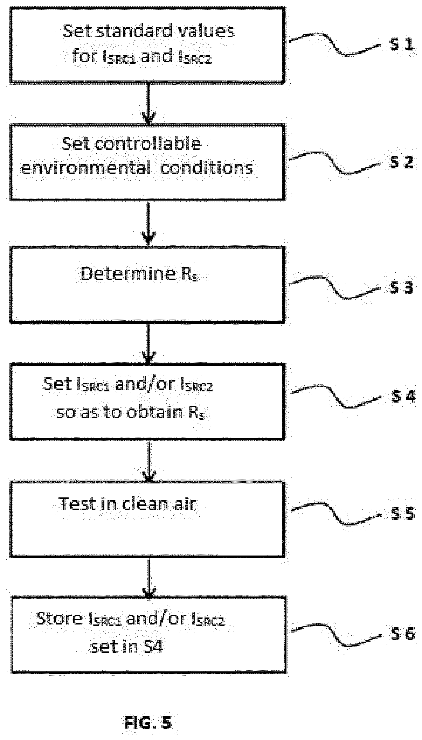

With reference to FIG. 5, a method is illustrated for calibrating a particulate detector. This method comprises a first step S1 of calibration in clean air, wherein a first standard value is set for the particulate detector for the first switching-on value $I_{SRC1}$ and a second standard value is set for the second switching-on value $I_{SRC2}$.

The response is measured, and a first series of parameters are pre-set.

One objective of the calibration step in clean air S1 is to obtain a reading excluding the particular features of the detector. According to one practical example, the light radiation detector 11, once it is immersed in a flow of air and calibration particulate, will read a value X consisting of a contribution X1 determined by the reflection of the particulate and by a contribution X0 determined by the reflection of the walls of the sampling chamber. The value X0 is specific to the single particulate detector, i.e. varies from particulate detector to particulate detector, because it is influenced, for example, by the mechanical tolerances and the materials.

The step in clean air S1 is used to determine the component X0 constituting a specific offset of the particulate detector that has to be deducted from the actual reading.

Calibration: Smoke tunnel step

Subsequently, in a second step S2, the detector is made to transit inside a tunnel (smoke tunnel) in which controllable environmental conditions are maintained. These controllable conditions can include temperature, humidity, particulate concentration and particulate sizes and can be resettable.

For example, it is possible to maintain an air flow at a constant speed with a concentration of particles with a known and predetermined size, or reference particulate. These particles can be obtained for example by an atomizer that is able to generate, for example starting from paraffin, a concentration of particulate with properties that are known and controllable within predefined limits. In other words, the reference particulate has predetermined features.

In a third calibration step S3 it is possible to set at least one of the first switching-on value $I_{SRC1}$ for the first source of light pulses LED1 and the second switching-on value $I_{SRC2}$ for the second source of light pulses LED2 so that the ratio R of the first detection value S1 to the second detection value S2 corresponds to the predetermined ratio $R_s$.

In general, the predetermined ratio $R_s$ is predetermined before or during the calibration step or manufacturing step of the particulate detector, for example during a step S3. It should be noted that the third step S3 is disclosed in FIG. 5 between the second step S2 and the fourth step S4 only for illustrative purposes and the third step S3 can be carried out at any instant preceding the carrying out of the fourth step S4.

Optionally, during the fourth step S4 it is also possible to set both the first switching-on value $I_{SRC1}$ for the first source of light pulses LED1 and the second switching-on value $I_{SRC2}$ for the second source of light pulses LED2 so that the ratio R of the first detection value S1 to the second detection value S2 corresponds to the predetermined ratio $R_s$.

In the present context, the meaning of setting a value has to be constructed as including the case in which the given value is set (or fixed) and then varied until the condition of corresponding to another value, for example the reference value, is reached, or setting a value on the basis of predetermined values and choosing the value that is nearest the desired condition.

It is further possible, although not necessary, for a reference detector to be installed inside the tunnel, the calibration value of the reference detector being checked periodically. In this case, an automatic calibration system managing the calibration of the particulate detector can be able to communicate with both the particulate detector that is the object of the calibration and located in the tunnel and with the reference detector.

If the relevant detector is present, at least one of the first switching-on value $I_{SRC1}$ of the first source of light pulses LED1 and the second switching-on value $I_{SRC2}$ of the second source of light pulses LED2 can be set so that respectively the first detection value S1 or the second detection value S2 has the same value as that indicated by the reference detector.

Alternatively, the first detection value S1 and the second detection value can correspond to a multiple or to a fraction of the value indicated by the reference detector.

In this case, the predetermined ratio $R_s$ can be a unit ratio, i.e. the second switching-on value $I_{SRC2}$ of the second source of light pulses LED2 can be so adjusted as to obtain a second detection value S2 that is equal to the first detection value S1.

In accordance with the above method, the first switching-on value can be set and then stored, further, the second switching-on value can be set and then stored. Alternatively, the first switching-on value can be set, the second switching-on value can also be set and subsequently the first value can be stored and also the second switching-on value can be stored.

The only constraint of the method disclosed above is that the respective value has to be first set and then stored, it is not for example significant that the first switching-on value is stored before the second switching-on value.

The values can be stored in a saving (or storage) step S6. From what has been said, it is clear that the particle detector, when evaluating the ratio between the two signals S1 and S2, to extrapolate the size of the particles, also takes account of the predetermined ratio $R_s$ defined previously.

Calibration: Last Clean Air step

In a fifth optional step S5, the particulate detector can be operated in the presence of clean air, i.e. in the absence of reference particulate and particulate of another type, to check the response values in clean air after the operating parameters have been calibrated and set by the smoke tunnel step.

With reference to the particular example shown in connection with the step S1, the value X0 can be again detected during the optional step S5. This value X0, which is determined by the reflection of the chamber and is independent of the reference particulate, is the offset to be removed from the reading, considering the set definitive switching-on value. The step S5 can thus be particularly advantageous if the switching-on values are modified inside the calibration in the tunnel.

This step can be carried out before or after step S6.

According to another embodiment, a particulate detector is further provided that is operable on the basis of light diffusion measurements and that is able to detect particulate on the basis of the ratio R of the first detection value to the second detection value.

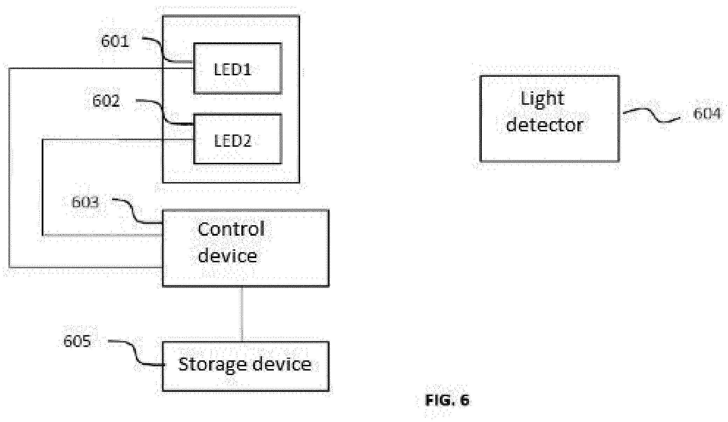

This particulate detector is disclosed in connection with FIG. 6 and can comprise a first source of light radiation LED1, indicated in the figure by the reference 601, a second source of light radiation LED2, indicated in the figure by the reference 602, a control device (microcontroller) 603, a light radiation detector 604 and a storage device 605.

The first source of light radiation 601 and a second source of light radiation 602 can be configured respectively to emit, on the basis of respective switching-on values, light radiation of a first wavelength $\lambda 1$ and of a second wavelength $\lambda 2$.

The control device can be configured to operate the first source of light radiation 601 and the second source of light radiation 602 respectively in accordance with the first switching-on value $I_{SRC1}$ and in accordance with the second switching-on value $I_{SRC2}$. At least one of the first switching-on value $I_{SRC1}$ and the second switching-on value $I_{SRC2}$ can be stored in the storage device 605 in a calibration step of the particulate detector. Alternatively, information indicative of the at least one of the first switching-on value $I_{SRC1}$ and the second switching-on value $I_{SRC2}$ can be stored in the storage device 605 instead of the values themselves.

The light radiation detector 604 can be configured to detect the first detection value corresponding to the radiation emitted from the first source of light radiation 601 and a second detection value corresponding to the radiation emitted from the second source of light radiation 602.

Further, the first switching-on value $I_{SRC1}$ and the second switching-on value $I_{SRC2}$ are such as to produce a predetermined ratio $R_s$ of the first detection value to the second detection value.

Lastly, the predetermined ratio $R_s$ being a value established prior to the storage of the first switching-on value $I_{SRC1}$ and of the second switching-on value $I_{SRC2}$.

In addition, or alternatively, according to yet another embodiment, the control device can be configured to control the first source of light radiation 601 and the second source of light radiation 602 in accordance respectively with the first switching-on value $I_{SRC1}$ and the second switching-on value $I_{SRC2}$, or in accordance respectively with the first reduced switching-on value $I_{SRC1LOW}$ and the second reduced switching-on value $I_{SRC2LOW}$ on the basis of a predetermined threshold value, information indicative of the predetermined threshold value stored in a calibration step of the detector.

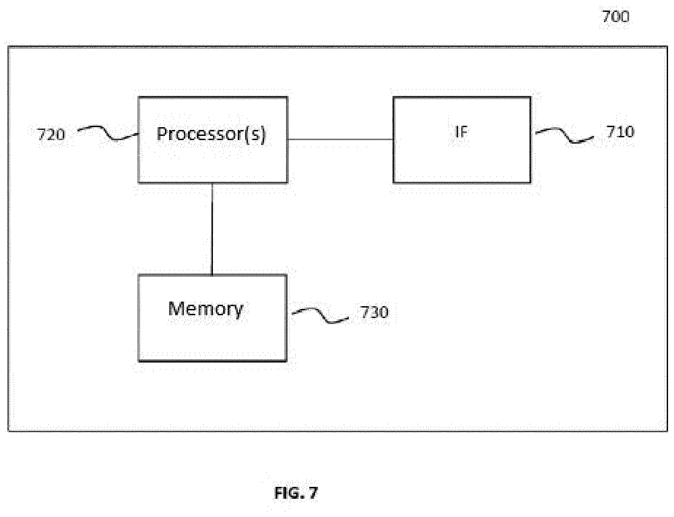

A further embodiment, disclosed in connection with Fig. 7, relates to a computer program comprising instructions that, when executed, cause the steps of a method for the calibration of a particulate detector to be carried out on a computer or by means of the computer, wherein the steps of this method are given by any combination of the steps of the method for the calibration of a particulate detector disclosed in this text.

A still further embodiment, disclosed in connection with Fig. 7, relates to a computer program comprising instructions that, when executed, cause the steps of a method for enhancing the detection dynamics of a particulate detector to be executed on a computer or by means of the computer in which the steps of this method are given by any combination of the steps of the method for enhancing the detection dynamics of a particulate detector disclosed in this text.

Figure 7 illustrates an example of a computer 700 suitable for carrying out the steps of the calibrating method disclosed above. In addition, or alternatively, the computer 700 is suitable for carrying out the steps of the method for enhancing the detection dynamics of a particulate detector disclosed above. In particular, the computer 700 comprises a processor 720, an IF interface 710, and a memory 730. The processor 720 can be of any type that is suitable for executing instructions in any language, and in particular can also be represented by a plurality of processors that are interconnected with one another. The IF interface is able to receive inputs and/or provide outputs in connection for example with indicative values of the first switching-on value $I_{SRC1}$, of the second switching-on value $I_{SRC1}$, of the first reduced switching-on value $I_{SRC1LOW}$ and of the second reduced switching-on value $I_{SRC2LOW}$. In addition, the interface can receive and/or transmit values associated with the threshold value and/or with the desired reference value $S_{ref}$. The memory 730 can be of any volatile and/or non-volatile type that is able to store at least temporarily one or more of the mentioned values.

Further embodiments

According to one particular embodiment, the installer can set in the particulate detector installation step two operating parameters. These operating parameters can be used by the algorithm contained in the internal microcontroller in the evaluation of the signals and in the consequent generation of the alarm signal.

In particular, setting an enhanced sensitivity coefficient and a false alarms rejection coefficient can be possible.

The enhanced sensitivity coefficient could indicate how reactive the detector has to be to those signals with a BIR ratio > 1 that indicate the presence of particles of smaller sizes so probably combustion fumes.

The false alarms rejection coefficient could indicate how much the detector has to slow the response to the signals with a BIR ratio < 1 that indicate the presence of particles of greater sizes that are accordingly probably combustion fume particles.

By adjusting the two parameters indicated above, it will be possible to adapt the operation of the detector by emphasizing independently both the high sensitivity to combustion fumes enabling the detector to intervene promptly and the high immunity to the false alarms, making the detector immune to contaminating agents (for example steam, mist, dust).

Enhanced sensitivity and rejection of false alarms coefficient

Below, in order to facilitate the explanation, it is assumed that the predetermined ratio $R_s$ corresponds to the unit ratio. It will nevertheless be apparent to the person skilled in the art that the concepts disclosed below are not limited by the numeric value of the predetermined ratio $R_s$. The ratio R between the two measurements (or BIR ratio) provides an indication of the particulate sizes. In greater detail, an R > 1 ratio is indicative of a particulate having a diameter < 0.2 micrometres (probably indicating combustion fumes), whereas an R < 1 ratio is indicative of a particulate having a diameter of > 0.2 micrometres (most likely indicating particulate that does not derive from combustion, and is due to agents like steam, dust, etc).

The enhanced sensitivity coefficient can tell the algorithm inside the detector by how much to increase the reading of the detector if the ratio R is greater than 1. For example,
if R > 1

$$V_{ACTUAL} = V_{READ} * (1 + R * C_{enhanced\ sensitivity})$$

On the other hand, the false alarms rejection coefficient tells the algorithm present inside the detector by how much to decrease the reading if the ratio R is less than 1. For example,
if R < 1

$$V_{ACTUAL} = V_{READ} - ((1 - R) * C_{FALS\ ALARMS\ REJECTION})$$

By way of example, the formulas shown above refer to corrections of linear type, nevertheless, other types of correction are also possible, for example corrections of exponential, logarithmic, polynomial type etc. are known.

As will be immediately apparent to the person skilled in the art, identical considerations apply if the particulate detector is not configured to detect smoke but is for example configured to detect particles of another type.

Correction in function of the temperature

The particulate detector could be further provided with a temperature sensor (not shown in the figure) that is able to detect the temperature in the immediate vicinity of the particulate detector.

The calibration operations could be performed at a reference temperature, in accordance with a preferential embodiment, this temperature could be around 25°C.

The particulate detector, and in particular the microcontroller, could be configured to modify the switching-on values $I_{SRC1}$, $I_{SRC2}$ and/or the reduced switching-on values $I_{SRC1LOW}$ and $I_{SRC2LOW}$ of the two light sources LED1 and LED2 in function of the temperature detected according to a predefined functional relation contained in the memory of the microcontroller.

This predefined functional relation could be appropriately a predefined table stored in the memory of the microcontroller.

This functional relation could be moreover obtained during the detector development stage and could be determined on the basis of the variations of the features of the components used by the particulate detector in function of the temperature at which they operate and on the basis of the reference temperature at which the calibration of the particulate detector was performed.

In other words, this table could contain temperature values and adjustment values of the switching-on values $I_{SRC1}$, $I_{SRC2}$ and/or of the reduced switching-on values $I_{SRC1LOW}$ and $I_{SRC2LOW}$. The adjustment (or correction) could be a linear adjustment, for example the adjustment value is simply subtracted from or added to the respective initial switching-on value or take on more complex forms, for example polynomial, exponential correction forms etc.

Lastly, for a given temperature, the functional relation, and accordingly the adjustment values, can be the same both for the switching-on values $I_{SRC1}$ and $I_{SRC2}$ and for the reduced switching-on values $I_{SRC1LOW}$ and $I_{SRC2LOW}$.

Alternatively and in order to take account of the peculiarities of the different light sources and of the particularities of the reduced switching-on values, the adjustment values can be different for each of the switching-on values $I_{SRC1}$ and $I_{SRC2}$ and of the reduced switching-on values $I_{SRC1LOW}$ and $I_{SRC2LOW}$ (for example four different adjustment values for a given temperature).

Also alternatively it is possible to use a determined value for the set of switching-on values $I_{SRC1}$ and $I_{SRC2}$ and another value for the set of reduced switching-on values $1_{SRC1LOW}$ and $I_{SRC2LOW}$, these two values being different from one another (in other words, two adjustment values that differ by a given temperature).

Adapting the switching-on values offers the technical advantage of being able to obtain a stable response within the entire temperature range within which the operation of the detector is guaranteed. According to one embodiment, the algorithm for enhancing the detection dynamics can be found in the microcontroller (or microprocessor) contained in the particulate detector and the parameters thereof can be calibrated by PC software during the calibration step (or during a gauging step).

As is apparent from what has been disclosed above, the embodiments and/or examples relating to the enhanced dynamics can be achieved independently of and separately from the embodiments and respective examples relating to the calibration. Optionally, however, these embodiments and/or examples can be combined, for example it is possible to achieve enhanced dynamics and calibration jointly, in which case farther detection accuracy is obtained thanks to the combination of the two aspects: in fact, by using for example the improved calibration disclosed above, it is possible to achieve more accurate detection, so that it is also possible to detect with greater accuracy when to switch between *"normal"* and reduced switching-on values.

The description set forth hereinabove of an embodiment applying the innovative principles of the invention is provided solely by way of example of these principles and therefore it should not be understood to be a limitation of the scope of the invention claimed herein.

Numerous modifications to the embodiments disclosed above are possible and will be fully apparent to the person skilled in the art. As has been made clear from the context in which the terms are used, reference can be made collectively to the first detection value (S1) and to the first reduced detection value (S1$_{LOW}$) as a "detection value". Further, reference can be made collectively to the second detection value (S2) and to the second reduced detection value (S2$_{LOW}$) as the other detection value. Similarly, reference can be made collectively to the first detection value (S1), to the first reduced detection value (S1$_{LOW}$), to the second detection value (S2) and to the second reduced detection value (S2$_{LOW}$) as the "detection values". Lastly, reference can be made to any of the detection values as the "detection value".

**Claims**

1. A method for enhancing the detection dynamics of a particulate detector operable on the basis of light diffusion measurements,
   the particulate detector comprising:

   - a first source of light radiation (LED1) and a second source of light radiation (LED2) configured respectively to emit light radiation of a first wavelength ($\lambda$1) and of a second wavelength ($\lambda$2); and
   - a light radiation detector (11) configured to detect detection values corresponding to radiation emitted from the first source of light radiation (LED1) and detection values corresponding to radiation emitted from the second source of light radiation (LED2);

   the method for enhancing detection dynamics comprising the steps of:

   - storing (V1) information indicative of a first switching-on value ($I_{SRC1}$) related to the first source of light radiation (LED1) and a second switching-on value ($I_{SRC2}$) related to the second source of light radiation (LED2);
   - storing (V2) information indicative of a first reduced switching-on value ($I_{SRC1LOW}$) related to the first source of light radiation (LED1) and a second reduced switching-on value ($I_{SRC2LOW}$) related to the second source of light radiation (LED2);
- storing (V3) information indicative of a predetermined threshold value indicating whether to operate the particulate detector on the basis of said switching-on values or operate the particulate detector on the basis of said reduced switching-on values.

2. Method for enhancing the detection dynamics according to claim 1, wherein the particulate detector is a smoke detector and the switching-on values are current values or voltage values, **preferably** wherein the first wavelength ($\lambda1$) and the second wavelength ($\lambda2$) are comprised within the infrared electromagnetic spectrum region or within the blue electromagnetic spectrum region and wherein the first wavelength ($\lambda1$) is comprised in an electromagnetic spectrum region different to the second wavelength ($\lambda2$).

3. Method according to one of claims 1 or 2, wherein:

the first switching-on value ($I_{SRC1}$) produces a first detection value (S1);
the second switching-on value ($I_{SRC2}$) produces a second detection value (S2);
the first reduced switching-on value ($I_{SRC1LOW}$) produces a first reduced detection value ($S1_{LOW}$);
the second reduced switching-on value ($I_{SRC2LOW}$) produces a second reduced detection value ($S2_{LOW}$);
wherein moreover, the first reduced detection value ($S1_{LOW}$) is a fraction of the first detection value (S1) and wherein the second reduced detection value ($S2_{LOW}$) is a fraction of the second detection value (S2).

4. Method for enhancing detection dynamics according to claim 3, wherein
the ratio of the first detection value (S1) to the first reduced detection value ($S1_{LOW}$) is equal to the ratio of the second detection value (S2) to the second reduced detection value ($S2_{LOW}$),
wherein preferably the ratio is five.

5. Method for enhancing detection dynamics according to one of the preceding claims, wherein the first switching-on value ($I_{SRC1}$) and the second switching-on value ($I_{SRC2}$) are such that the second detection value (S2) corresponds to a multiple of the first detection value (S1), wherein the first switching-on value ($I_{SRC1}$) and the second switching-on value ($I_{SRC2}$) are determined in a calibration step of the particulate detector, **preferably** wherein the first detection value (S1) is substantially equal to the second detection value (S2).

6. Method for enhancing detection dynamics according to claim 5, wherein
the first detection value (S1) corresponds to a reference value ($S_{ref}$), wherein **preferably** the reference value ($S_{ref}$) corresponds to a read value of a reference detector.

7. Particulate detector operable on the basis of light diffusion measurements, comprising:

- a first source of light radiation (LED1) and a second source of light radiation (LED2) configured respectively to emit light radiation of a first wavelength ($\lambda1$) and of a second wavelength ($\lambda2$) when operated on the basis of switching-on values; and
- a control device configured to operate the first source of light radiation (LED1) in accordance with a first switching-on value ($I_{SRC1}$) and in accordance with a first reduced switching-on value ($I_{SRC1LOW}$), and configured to operate the second source of light radiation (LED2) in accordance with a second switching-on value ($I_{SRC2}$) and with a second reduced switching on value ($I_{SRC2LOW}$), wherein information indicative of switching-on values are stored in a storage device; and
- a light radiation detector (11) configured to detect a first detection value relating to the radiation emitted from the first source of light radiation (LED1) and a second detection value relating to the radiation emitted from the second source of light radiation (LED2);

**characterised in that**:

the control device is configured to control the first source of light radiation (LED1) and the second source of light radiation (LED2)
in accordance respectively with the first switching-on value ($I_{SRC1}$) and the second switching-on value ($I_{SRC2}$), or in accordance respectively with the first reduced switching-on value ($I_{SRC1LOW}$) and the second reduced switching-on value ($I_{SRC2LOW}$),
on the basis of a predetermined threshold value, wherein information indicative of the predetermined threshold value is stored in a calibration step of the detector.

8. Particulate detector according to claim 7, wherein
the control device is configured to control the first source of light radiation (LED1) and the second source of light radiation (LED2) respectively in accordance with the first switching-on value ($I_{SRC1}$) and the second switching-on value ($I_{SRC2}$), if both a first detection value (S1) and a second detection value (S2) are smaller than the predetermined threshold value, and
the control device is configured to control the first source of light radiation (LED1) and the second source of light radiation (LED2) respectively in accordance with the first reduced switching-on value ($I_{SRC1LOW}$) and the second reduced switching-on value ($I_{SRC2LOW}$), if at least one of the first detection value (S1) and the second detection value (S2) is greater than or equal to the predetermined threshold value.

9. Computer program including instructions that, when executed by a computer, execute a method for enhancing detection dynamics of a particulate detector according to one of claims 1 to 6.

10. System for enhancing detection dynamics of a particulate detector capable of enhancing detection dynamics of a particulate detector configured to carry out the steps of one of claims 1 to 6.

11. Method for the calibration of a particulate detector operable on the basis of light diffusion measurements and able to detect particulate on the basis of a ratio (R) of a first detection value (S1) to a second detection value (S2), the particulate detector comprising:

   - a first source of light radiation (LED1) and a second source of light radiation (LED2) configured respectively to emit, on the basis of respective switching-on values, light radiation of a first wavelength ($\lambda$1) and of a second wavelength ($\lambda$2); and
   - a light radiation detector (11), configured to detect a detection value corresponding to radiation emitted from the first source of light radiation (LED1) and a detection value corresponding to radiation emitted from the second source of light radiation (LED2);

   the method for the calibration comprising the steps of:

   A) setting (U1) at least one of a first switching-on value ($I_{SRC1}$) for the first source of light radiation (LED1) and a second switching-on value ($I_{SRC2}$) for the second source of light radiation (LED2) so that the ratio (R) of the first detection value (S1) to a second detection value (S2) corresponds to a first predetermined ratio;
   B) storing (U2) information indicative of the at least one of a first switching-on value ($I_{SRC1}$) and a second switching-on value ($I_{SRC2}$) set in the step A) .

12. A particulate detector that is operable on the basis of light diffusion measurements and capable of detecting particulate on the basis of a ratio (R) of a first detection value to a second detection value, comprising:

   - a first source of light radiation (LED1) and a second source of light radiation (LED2) configured respectively to emit, on the basis of respective switching-on values, light radiation of a first wavelength ($\lambda$1) and of a second wavelength ($\lambda$2);
   - a control device configured to operate the first source of light radiation (LED1) and the second source of light radiation (LED2) respectively in accordance with a first switching-on value ($I_{SRC1}$) and a second switching-on value ($I_{SRC2}$) , wherein information indicative of the at least one switching-on value between the first switching-on value ($I_{SRC1}$) and the second switching-on value ($I_{SRC2}$) is stored in a calibration step of the particulate detector; and
   - a light radiation detector (11) configured to detect a first detection value corresponding to the radiation emitted from the first source of light radiation (LED1) and a second detection value corresponding to the radiation emitted from the second source of light radiation (LED2);

   wherein the first switching-on value ($I_{SRC1}$) and the second switching-on value ($I_{SRC2}$) are such as to produce a predetermined ratio of the first detection value to the second detection value, the predetermined ratio being a value established prior to storage of the first switching-on value ($I_{SRC1}$) and of the second switching-on value ($I_{SRC2}$) .

13. Computer program including instructions that, when executed by a computer, execute the method for the calibration of a particulate detector according to claim 11.

14. System for the calibration of a particulate detector capable of calibrating a particulate detector by carrying-out the steps of claim 11.

15. Particulate detector according to claim 12, further comprising:

a temperature sensor configured to detect the temperature of the particulate detector;
wherein the particulate detector is configured to modify at least a switching-on value of the switching-on values on the basis of the temperature detected by the temperature sensor.

FIG. 1A

EP 3 608 657 A2

FIG. 1B

22

Store $I_{SRC1}$ and $I_{SRC2}$ — V 1

Store $I_{SRC1LOW}$ and $I_{SRC2LOW}$ — V 2

Store predetermined threshold value — V 3

FIG. 2

Define first and second reference switching-on value — T 1

Define first and second functional relation — T 2

Determine $I_{SRC1LOW}$ and $I_{SRC2LOW}$ — T 3

**FIG. 3**

Set $I_{SRC1}$ and/or $I_{SRC2}$ — U 1

Store $I_{SRC1}$ and/or $I_{SRC2}$ — U 2

**FIG. 4**

Set standard values
for $I_{SRC1}$ and $I_{SRC2}$ — S 1

Set controllable
environmental conditions — S 2

Determine $R_s$ — S 3

Set $I_{SRC1}$ and/or $I_{SRC2}$
so as to obtain $R_s$ — S 4

Test in clean air — S 5

Store $I_{SRC1}$ and/or $I_{SRC2}$
set in S4 — S 6

**FIG. 5**

FIG. 6

720 ~~ | Processor(s) | ―――― | IF | ~~ 710

| Memory | ~~ 730

FIG. 7

EP 3 608 657 A2